# EUROPÄISCHE PATENTANMELDUNG

(11) **EP 2 647 601 A1**
(43) Veröffentlichungstag der Anmeldung: **09.10.2013**
(21) Anmeldenummer: 12005146.1
(22) Anmeldetag: 12.07.2012
(51) Int. Cl.: C01B 31/06

(54) **Verfahren zur Herstellung von Diamant**

(30) Priorität: 05.04.2012 DE 102012006995
(71) Anmelder: Linde Aktiengesellschaft, 80331 Munich (DE)
(72) Erfinder: Assadi, Hamid., 40237 Düsseldorf (DE); Gärtner, Frank., 22119 Hamburg (DE); Heinrich, Peter, 82110 Germering (DE); Klassen, Thomas., 21465 Wentorf (DE); Kreye, Heinrich., 22175 Hamburg (DE); Krömmer, Werner, 84034 Landshut (DE)

(57) **Zusammenfassung**

Die Erfindung betrifft ein Verfahren zur Herstellung von Diamant oder DLC Kohlenstoff durch Umwandlung mindestens einer anderen Erscheinungsform von Kohlenstoff, wie Graphit, amorphem Kohlenstoff, Fullerenen, Glaskohlenstoff, Graphen, Kohlenstoffschaum oder einem Gemisch dieser Erscheinungsformen. Das Verfahren umfasst ein Beschleunigen von Partikeln (16) und ein Bewirken ihres Aufprallens auf ein Substrat (15). Die Partikel und/oder das Substrat enthalten/enthält die andere Erscheinungsform des Kohlenstoffs oder bestehen/besteht aus ihr. Die Umwandlung wird durch das Aufprallen der Partikel auf das Substrat hervorgerufen, wobei mit Vorteil Kaltgasspritzen eingesetzt wird.

## Beschreibung

Die Erfindung betrifft ein Verfahren zum Herstellen von Diamant oder diamantähnlichem Material aus einer Erscheinungsform des Kohlenstoffs, wie beispielsweise Graphit.

Die Synthese von Diamant aus Graphit oder C60 (Fullerenen) erfordert das Einwirken eines hohen Drucks auf den Graphit. Hierfür sind einerseits statische, andererseits dynamische Verfahren bekannt.

Bei den statischen Verfahren wird Graphit bei hoher Temperatur über einen längeren Zeitraum zusammengepresst. Unter Normalbedingungen beginnt die Umwandlung von Graphit in polykristallinen Diamant bei Drücken oberhalb von 12 GPa (1 GPa = 10 kbar) und Temperaturen im Bereich von 2700°C (Bundy,1962, J. Chem. Phys.). Damit die Umwandlung schneller erfolgt, verwendet man sogar etwa 15 GPa und 3000°C. Diese Bereiche sind technisch aufwendig zu realisieren. Mit Hilfe metallischer Katalysatoren (in der Regel einer Metallschmelze) können jedoch die Reaktionsbedingungen auf etwa 1500°C und 6 GPa und damit in eine unter Effizienzgesichtspunkten realistischere Größenordnung gesenkt werden.

Die Gruppe der dynamischen Verfahren erfordern gegenüber den statischen Verfahren wesentlich geringere Temperaturen.

Ein bekanntes Beispiel eines dynamischen Verfahrens zur Diamantsynthese ist die Umwandlung von Graphit durch ein Kompaktieren des Graphits mit Hilfe von explosiv erzeugten Stoßwellen (Decarli und Jamieson, 1961, Science). Der dabei durch hohen Druck erzeugte Diamant kühlt so rasch ab, dass die für den Diamant charakteristische Struktur auch bei Raumtemperatur erhalten bleibt. Bei der Umwandlung von Graphit zu Diamant handelt es sich in diesem Fall auch um eine martensitartige Umwandlung, für die nur wenige Nanosekunden benötigt werden (Erskine und Nellis, 1991, Nature).

Gemäß einer anderen dynamischen Methode wird der hohe Druck für die Umwandlung durch Kavitation in einem Ultraschallbad erzeugt. Der Graphit befindet sich hier in einer organischen Lösung bei Raumtemperatur. Nachteil für eine kommerzielle Nutzung dieses Verfahrens ist, dass bisher bei Laborversuchen eine Ausbeute an Diamant von typischerweise 1 bis 2 % erreicht wurde.

Aufgabe der vorliegenden Erfindung ist es, ein effizientes Verfahren zum Herstellen von Diamant oder diamantähnlichem Kohlenstoff, im folgenden auch als DLC (Diamond Like Carbon) Kohlenstoff bezeichnet, aus einer anderen Erscheinungsform des Kohlenstoffs bereitzustellen.

### Offenbarung der Erfindung

Die Aufgabe wird gelöst durch das Verfahren zum Herstellen von Diamant oder DLC Kohlenstoff gemäß Anspruch 1. Bevorzugte Ausführungsformen werden in den Unteransprüchen und der nachfolgenden Beschreibung offenbart.

Entsprechend dem erfindungsgemäßen Verfahren wird Diamant oder DLC Kohlenstoff durch Umwandlung mindestens einer anderen (d.h. von Diamant verschiedenen) Erscheinungsform von Kohlenstoff erzeugt. Als solche andere Erscheinungsformen können beispielsweise Graphit, amorpher Kohlenstoff (C60), Fullerene, Glaskohlenstoff, Graphen, Aktivkohle, Kohlenstoffnanoröhrchen, Kohlenstoffschaum oder ein Gemisch dieser Erscheinungsformen verwendet werden. Das Verfahren umfasst einen Schritt des Beschleunigens von Partikeln und ein Bewirken eines Aufpralls der Partikel auf ein Substrat.

Die Partikel und/oder das Substrat enthalten/enthält mindestens eine andere Erscheinungsform des Kohlenstoffs oder bestehen/besteht sogar aus ihr. Beispielsweise können insbesondere sogenannte Einlaufwerkstoffe (Abradables) verwendet werden, die als Verbundstoffe aus einer metallischen Komponente und Graphit bestehen, oder es kann Gusseisen als Material für Partikel und/oder Substrat eingesetzt werden, z. B. Grauguss, der bis zu 4 Gewichtsprozent Kohlenstoff enthält, der in Form von Graphit lamellenartig im Eisen verteilt ist.

In Ausführungsformen, bei denen Partikel eingesetzt werden, die mindestens eine andere Erscheinungsform des Kohlenstoffs enthalten, können die Partikel beispielsweise aus einem Agglomerat von Graphit mit einem Metall, mit einer Metalllegierung und/oder mit einem keramischen Material bestehen. Alternativ oder zusätzlich können Partikel aus Keramik und/oder Metall verwendet werden, die mit der anderen Erscheinungsform des Kohlenstoffs (z.B. mit Graphit) beschichtet sind.

Vorteilhaft sind Partikelzusammensetzungen, bei denen eine Komponente aus einem Material hoher Dichte besteht; damit kann der Aufpralldruck erhöht werden. Insbesondere Gemische aus einer anderen Erscheinungsform des Kohlenstoffs (z.B. Graphit) mit Metall oder Metallen oder Metalllegierungen sind von Vorteil, wobei hier Metalle oder Metalllegierungen mit hoher Dichte besonders bevorzugt sind.

Es können auch verschiedenartige, miteinander vermischte Partikel der oben genannten Arten eingesetzt werden.

Die Beschleunigung der Partikel ist so stark, dass ihr Aufprall auf das Substrat bewirkt, dass die andere Erscheinungsform des Kohlenstoffs (in Partikeln und/oder Substrat) in Diamant oder diamantähnlichen Kohlenstoff (DLC Kohlenstoff) umgewandelt wird.

Die Kollision der Partikel mit dem Substrat hat nämlich zur Folge, dass das Kristallgitter der anderen Erscheinungsform(en) des Kohlenstoffs durch einen Schervorgang von einer Struktur in eine andere umgewandelt wird. Solche Umwandlungen benötigen keine thermische Unterstützung, sondern nur hohe Spannungen, die sich mit Schallgeschwindigkeit im Kristallgitter ausbreiten. Das neue Kristallgitter entsteht durch Verschiebung der einzelnen Atome um einen Betrag, der geringer ist als der Abstand zum Nachbaratom. Im vorliegenden Fall wird das Kristallgitter der anderen Erscheinungsform des Kohlenstoffs durch den Aufprall in eine Diamantstruktur oder diamantähnliche Struktur verformt.

Das umgewandelte Diamantmaterial kann in einer Schicht auf dem Substrat haften bleiben oder in einem vom Substrat abfallenden Pulver enthalten sein.

Wird ein Substrat verwendet, das die mindestens eine andere Erscheinungsform des Kohlenstoffs enthält, so kann diese beispielsweise in einer Oberflächenschicht enthalten sein und durch den unmittelbaren Aufprall der Partikel in Diamant oder diamantähnlichen Kohlenstoff (DLC Kohlenstoff) umgewandelt werden. Alternativ kann das Substrat eine Folie oder dünnen Platte umfassen, unter der eine Schicht mit der (den) anderen Erscheinungsform(en) des Kohlenstoffs liegt. Bei der Herstellung des Diamants oder diamantähnlichen Kohlenstoffs in dieser Ausführungsform prallen die Partikel auf die Folie bzw. Platte, die den so erzeugten Druck auf die Kohlenstoffschicht überträgt und so deren Umwandlung bewirkt. Diese Ausführungsform erlaubt eine einfache Trennung des erzeugten Diamantmaterials von den verwendeten Partikeln, insbesondere verhindert sie, dass die Partikel als Schicht über dem Diamantmaterial haften bleiben. Die Folie oder dünne Platte ist vorzugsweise leicht von dem erzeugten Material abzulösen, das Diamant oder diamantähnlichen Kohlenstoff (DLC Kohlenstoff) enthält.

Die erforderliche Geschwindigkeit, auf die die Partikel beschleunigt werden müssen, damit eine Umwandlung erfolgt, hängt von der Größe und Dichte der Partikel und der Temperatur des umzuwandelnden Materials (also der anderen Erscheinungsform in Partikeln und/oder Substrat) ab. Sie kann mit Hilfe einer Hugoniotkurve bestimmt werden. Abhängig von der Temperatur sind im Allgemeinen Geschwindigkeiten zwischen 1500 und 1600 Metern pro Sekunde besonders geeignet (Savinyik et al., 2009, Shock Compression of Condensed Matter).

Das Beschleunigen der Partikel kann auf verschiedene Weisen realisiert werden. In einer bevorzugten Ausführungsform der vorliegenden Erfindung erfolgt es durch das Verfahren des Kaltgasspritzens.

Beim Kaltgasspritzen handelt es sich um ein thermisches Spritzverfahren, das zur Beschichtung und Herstellung von Bauteilen in verschiedenen Anwendungsgebieten bekannt ist. Ein pulverförmiger Spritzwerkstoff wird dabei mit einem expandierenden Prozessgasstrom durch eine Düse hindurch beschleunigt und auf ein Substrat gerichtet. In der Regel werden Spritzpartikel mit einem Durchmesser von 1 bis 250 µm verwendet; der Gebrauch gröberer Partikel ist dabei zumeist kostengünstiger als der Einsatz feinerer Partikel.

Um den Wirkungsgrad zu erhöhen, kann das Prozessgas vor der Düse erwärmt werden. Dadurch kann sowohl die Partikelgeschwindigkeit als auch die Partikeltemperatur im Moment des Aufpralls beeinflusst werden. Je wärmer die Partikel sind, desto höher ist der Wirkungsgrad des Kaltgaspritzens. Zudem können mit wärmeren Partikeln dichtere Schichten mit höherer Festigkeit gespritzt werden. Die Temperatur der Partikel wird beim Kaltgasspritzen jedoch nicht so weit erhöht, dass die Partikel vor dem engsten Querschnitt der Düse schmelzen.

Bei geeigneter Wahl der Prozessparameter Gasdruck und Gastemperatur haften die auftreffenden Partikel auf dem Substrat. Dies erfolgt dabei jedoch nicht durch ein An-oder Aufschmelzen, sondern ist Resultat einer intensiven plastischen Verformung beim Aufprall, die so schnell ist, dass die damit verbundene Erwärmung/Wärme nicht ins Innere der Partikel abgelenkt wird. Diese Erwärmung bewirkt zusammen mit dem Druck beim Aufprall die Haftung.

Mit dem Kaltgasspritzen können Kollisionsgeschwindigkeiten erzeugt werden, bei denen ausreichend hohe Drücke für die Umwandlung von Kohlenstoff anderer Erscheinungsform in Diamant oder DLC Kohlenstoff entstehen. Gemäß einer Ausführungsform der vorliegenden Erfindung werden hierzu Druck und Temperatur des Gases geeignet so aufeinander abgestimmt, dass eine Partikelgeschwindigkeit von mindestens 1500 m/s, bevorzugt von mindestens 1600 m/s erreicht wird; hierzu können bekannte Ergebnisse und Modelle herangezogen werden, die auf experimentellem und/oder theoretischem Wege erzielt bzw. entwickelt werden und die für vorgegebene Partikel die zugrundeliegenden funktionalen Abhängigkeiten von Druck, Temperatur und Partikelgeschwindigkeit voneinander unter den jeweiligen Ausgangsbedingungen reflektieren. Eine Verwendung des Kaltgasspritzens für die Herstellung von Diamant oder DLC Kohlenstoff bietet daher den Vorteil einer einfachen Steuerung, weil während der Herstellung im Wesentlichen nur Druck und Temperatur des Prozessgases kontrolliert werden müssen.

Beim Aufprall der Partikel kommt es beim Kaltgasspritzen zu einer extrem schnellen Verformung des Materials mit Verformungsraten bis zu 10⁹ s⁻¹ bei Drücken im Bereich von mehreren GPa sowie zu einer extrem schnellen Abkühlung der durch das Verformen erhitzten Werkstoffbereiche. Die Abkühlraten liegen dabei im Bereich von 10⁹ Ks⁻¹, also 1 Kelvin pro Nanosekunde. Die rasche Abkühlung der erhitzten Kontaktzone der Partikel sorgt dafür, dass die metastabile Struktur des Diamants oder des diamantähnlichen Kohlenstoffs (DLC Kohlenstoff) auch nach dem Druckabbau und der Abkühlung auf Umgebungstemperatur noch vorhanden ist.

In einer Ausführungsform der vorliegenden Erfindung, bei der das Beschleunigen der Partikel durch Kaltgasspritzen erfolgt, wird als Prozessgas vorzugsweise Helium oder Stickstoff verwendet. Mindestens im Falle, dass die verwendeten Partikel (d.h. nicht ausschließlich das Substrat) die andere(n) Erscheinungsform(en) des Kohlenstoffs enthalten, sind diese Gase sind besonders geeignet, Druck und Temperatur so aufeinander einzustellen, dass die Partikel einerseits bis zu ihrem Aufprall eine geeignete Geschwindigkeit erreichen, andererseits nicht schmelzen. Besonders bevorzugt ist dabei eine Verwendung von Helium, weil bei einer Verwendung von Helium bei gleichem Gasdruck und gleicher Gastemperatur im Vergleich zu einer Verwendung von Stickstoff höhere Partikelgeschwindigkeiten erreicht werden. Werden mit Stickstoff als Prozessgas ausreichend hohe Partikelgeschwindigkeiten erreicht, kann auch der im Vergleich zu Helium billigere Stickstoff verwendet werden.

Eine Ausführungsform des erfindungsgemäßen Verfahrens umfasst einen Schritt eines Herauslösens des hergestellten Diamants oder diamantähnlichen Kohlenstoffs aus einem Gemisch, das neben dem Diamant oder diamantähnlichen Kohlenstoff ein anderes Material (wie beispielsweise Graphit) umfasst. In Fällen, in denen die Umwandlung des Kohlenstoffs einer anderen Erscheinungsform nicht vollständig erfolgt (beispielsweise aufgrund gewählter Prozessbedingungen wie Partikelgröße oder Vorrichtungsmerkmale), kann auf diese Weise ein mindestens annähernd reines Diamantmaterial oder diamantähnliches Produkt hergestellt werden.

Zur Trennung können Verfahren dienen, die aus der Herstellung von Diamant mit Hilfe von Explosivtechniken bekannt sind. Beispielhaft sei in diesem Zusammenhang auf die japanische Patentanmeldung JP 02-120220 A verwiesen.

Eine Ausführungsform des Verfahrens umfasst ein Erzeugen einer Oberflächenschicht auf einem Werkstück, die den hergestellten Diamant oder diamantähnlichen Kohlenstoff enthält oder aus diesem besteht. Das Werkstück kann dadurch beispielsweise besonders abriebfest gemacht werden.

Alternativ kann das Verfahren zur Herstellung von Diamant oder DLC Kohlenstoff dessen Erzeugung in Form von Staub, Pulver, Granulat oder einem Agglomerat umfassen. Insbesondere kann für die Herstellung derartiger Materialformen ein Herstellen zunächst eines Gemischs, das Diamant oder diamantähnlichen Kohlenstoff

(DLC Kohlenstoff) enthält, sowie ein anschließendes Trennen des Gemischs erfolgen. Staub, Pulver, Granulat oder einem Agglomerat können für verschiedene Verwendungszwecke erwünscht sein, beispielsweise als Zusatz für Polierflüssigkeiten oder -pasten, oder als Beschichtungsmaterial für Schleifmittel.

### Figurenbeschreibung

- Figur 1: zeigt beispielhaft eine Vorrichtung zum Kaltgasspritzen, wie sie zur Durchführung des erfindungsgemäßen Verfahrens verwendet werden kann;
- Figur 2: ist ein Diagramm, aus dem Temperatur-Druck-Gebiete abgelesen werden können, für die unter einer beispielhaften Kombination an Ausgangsbedingungen ausreichend hohe Partikelgeschwindigkeiten erreicht werden.

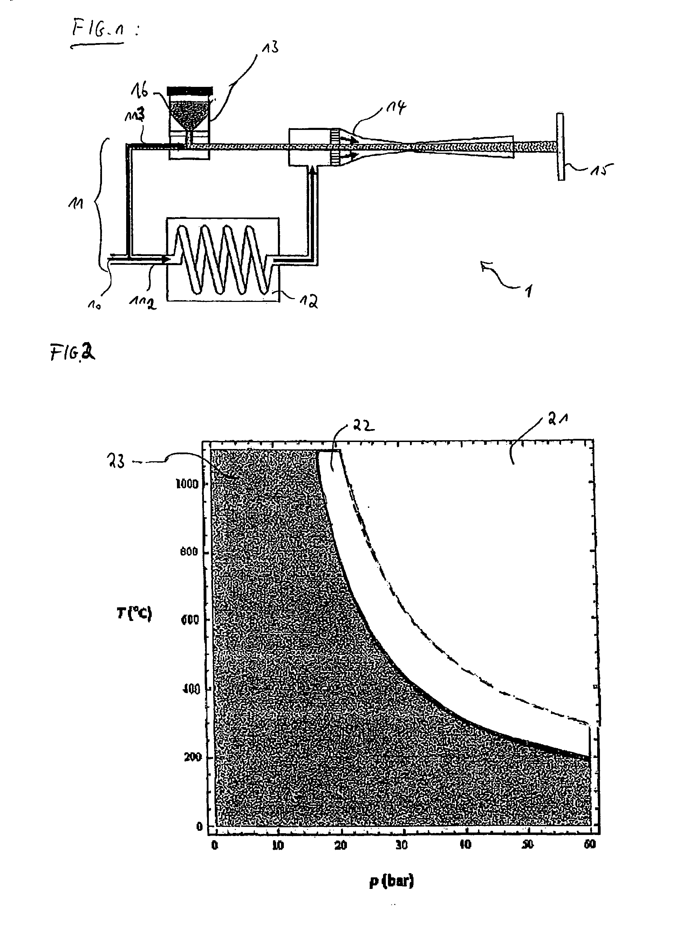

In Figur 1 ist schematisch eine Kaltgasspritzanlage 1 gezeigt, wie sie gemäß einer bevorzugten Ausführungsform der Erfindung eingesetzt wird. Die Anlage umfasst ein Gasleitungssystem 11, das an eine nicht gezeigte Gaszufuhr für das Prozessgas angeschlossen ist. Ein Teil 112 des Gasleitungssystems führt durch eine Heizungsanlage 12, ein anderer Teil 113 führt an einer Partikeleinspeiseeinrichtung 13 vorbei, die Partikel 16 beispielsweise in Form eines Pulvers oder Granulats enthält. Die Teile 112 und 113 des Gasleitungssystems laufen vor oder in einer Düse 14, beispielsweise einer konvergierenden-divergierenden Laval-Düse, zusammen. Die Düse ist auf ein Substrat 15 gerichtet.

Im Prozessablauf des Kaltspritzens wird Prozessgas 10 unter Druck durch die beiden Teile 112 und 113 des Gasleitungssystems geleitet und dort erhitzt beziehungsweise mit Partikeln aus der Partikeleinspeiseeinrichtung 13 angereichert. Beide Gasströme werden in oder vor der Düse 14 vereint und in der Düse entspannt. Die Partikel werden mit dem Gasstrom beschleunigt, so dass sie mit hoher Geschwindigkeit auf das Substrat 15 prallen.

Bei der Herstellung von Diamant oder DLC Kohlenstoff mit Hilfe des Kaltgasspritzens kann als Partikelmaterial und/oder als Substrat eine von Diamant verschiedene Erscheinungsform des Kohlenstoffs, bevorzugt Graphit, aber auch C60 (Fullerene), verwendet werden. Durch geeignete, von den jeweiligen Parametern der Kaltspritzanlage (beispielsweise dem verwendeten Prozessgas und/oder der speziellen Düse) abhängige Wahl des Gasdrucks und der Gastemperatur können am Ausgang der Düse Partikelgeschwindigkeiten von 1500 bis 1600 Metern pro Sekunde erreicht werden. Wie oben erläutert, kann dadurch eine Umwandlung der anderen Erscheinungsform des Kohlenstoffs in Diamant oder diamantähnlichen Kohlenstoff bewirkt werden.

In Figur 2 ist ein möglicher zweidimensionaler Definitionsbereich einer Funktion dargestellt, die Wertepaare aus Temperatur und Druck des Prozessgases in einer Kaltgasspritzanlage eine Partikelgeschwindigkeit zuordnet. Die Temperatur ist in °C und der Druck in bar angegeben.

Bei der Berechnung des Diagramms wurde die von Assadi et al. beschriebene Methode (Assadi et al., 2011, J. Thermal Spray Technology) für eine Kinetiks 4000 Spritzanlage mit Düse Typ D 51, für Graphitpartikel mit einem Durchmesser von 20 µm und für Helium als Prozessgas angewandt.

Die jeweils resultierenden Funktionswerte sind nicht explizit dargestellt, vielmehr ist durch die Gebiete 21 und 22 lediglich angegeben, ob diese Funktionswerte ausreichend groß sind, um beim Aufprall einen Druck zu erzeugen, der eine Umwandlung von Graphit in Diamant bewirkt: Im ersten Gebiet 21 ist dies der Fall, im dritten Gebiet 23 nicht. Das zweite Gebiet 22 stellt einen Übergangsbereich dar; er kennzeichnet die Bedingungen unter denen die Partikel auf 1500 bis 1600 m/s beschleunigt werden. Es handelt sich dabei um die Geschwindigkeit der Partikel am Ausgang der Düse.

### Bezugszeichenliste:

- 1: Kaltspritzanlage
- 10: Prozessgas
- 11: Gasleitungssystem
- 112: beheizter Teil des Gasleitungssystems
- 12: Heizungsanlage
- 113: Teil des Gasleitungssystems mit Partikeleinlass
- 13: Partikeleinspeiseeinrichtung
- 14: Düse
- 15: Substrat
- 16: Partikel

- 21: erstes Gebiet eines Gastemperatur-Gasdruckbereich
- 22: zweites Gebiet eines Gastemperatur-Gasdruckbereich
- 23: drittes Gebiet eines Gastemperatur-Gasdruckbereich

## Patentansprüche

1. Verfahren zur Herstellung von Diamant oder DLC Kohlenstoff durch Umwandlung mindestens einer anderen Erscheinungsform von Kohlenstoff, wie Graphit, amorphem Kohlenstoff, Fullerenen, Glaskohlenstoff, Graphen, Aktivkohle, Kohlenstoffnanoröhrchen, Kohlenstoffschaum oder einem Gemisch dieser Erscheinungsformen,
**dadurch gekennzeichnet, dass**
das Verfahren ein Beschleunigen von Partikeln (16) und ein Bewirken ihres Aufprallens auf ein Substrat (15) umfasst,
wobei die Partikel und/oder das Substrat die andere Erscheinungsform des Kohlenstoffs enthalten/enthält oder aus ihr bestehen/besteht,
und wobei die Umwandlung durch das Aufprallen der Partikel auf das Substrat hervorgerufen wird.

2. Verfahren nach Anspruch 1, wobei die Partikel bis zu ihrem Aufprallen auf das Substrat auf eine Geschwindigkeit von mindestens 1500, bevorzugt von mindestens 1600 Metern pro Sekunde beschleunigt werden

3. Verfahren nach Anspruch 1 oder 2, wobei das Beschleunigen der Partikel durch Kaltgasspritzen erfolgt.

4. Verfahren nach Anspruch 3, wobei als Prozessgas (10) Helium und/oder Stickstoff verwendet wird.

5. Verfahren nach einem der vorstehenden Ansprüche, wobei das Verfahren zudem einen Schritt umfasst, in dem der hergestellte Diamant oder diamantähnliche Kohlenstoff aus einem Gemisch herausgetrennt wird, das neben dem Diamant oder diamantähnlichen Kohlenstoff ein anderes Material umfasst, beispielsweise Graphit.

6. Verfahren nach einem der vorstehenden Ansprüche, bei dem der hergestellte Diamant oder diamantähnliche Kohlenstoff in Form von Staub, Pulver, Granulat oder einem Agglomerat erzeugt wird.

7. Verfahren nach einem der vorstehenden Ansprüche, bei dem eine Oberflächenschicht auf einem Werkstück erzeugt wird, die den hergestellten Diamant oder diamantähnlichen Kohlenstoff enthält oder aus diesem besteht.

8. Verfahren nach einem der vorstehenden Ansprüche, wobei die Partikel und/oder das Substrat aus Gusseisen, vorzugsweise Grauguss, bestehen/besteht oder aus einem Verbundstoff, der eine metallische Komponente und Graphit enthält.

9. Verfahren nach einem der vorstehenden Ansprüche, wobei das Substrat eine Folie oder dünne Platte umfasst, unter der eine Schicht liegt, die die mindestens eine andere Erscheinungsform des Kohlenstoffs enthält, wobei die Partikel auf die Folie oder dünne Platte prallen und diese deren Druck auf die Schicht überträgt.
